# EUROPÄISCHE PATENTSCHRIFT

(11) **EP 3 463 175 B1**
(45) Veröffentlichungstag und Bekanntmachung des Hinweises auf die Patenterteilung: **21.07.2021**
(21) Anmeldenummer: 17730712.1
(22) Anmeldetag: 02.06.2017
(51) Int. Cl.: A61C 9/00, A61C 13/00

(54) **VERFAHREN ZUR HERSTELLUNG EINES INDIVIDUALISIERTEN DENTALEN ABDRUCKLÖFFELS**
METHOD OF MANUFACTURE OF INDIVIDUALIZED DENTAL IMPRESSION TRAY
PROCÉDÉ DE FABRICATION D'UN PORTE-EMPREINTE DENTAIRE INDIVIDUALISÉ

(30) Priorität: 03.06.2016 DE 102016209828
(43) Veröffentlichungstag der Anmeldung: 10.04.2019
(73) Patentinhaber: Sirona Dental Systems GmbH, 64625 Bensheim (DE)
(72) Erfinder: OSKAM, Thomas, 8200 Schaffhausen (CH); KAUFMANN-JINOIAN, Vanik, 4332 Stein (CH)
(74) Vertreter: Özer, Alpdeniz
(86) Internationale Anmeldenummer: PCT/EP2017/063429
(87) Internationale Veröffentlichungsnummer: WO 2017/207748

(56) Entgegenhaltungen:
- WO-A1-2013/026600
- DE-A1- 10 004 415
- GB-A- 2 443 604
- JP-A- 2015 066 258
- US-A- 3 473 225

## Beschreibung

Die Erfindung betrifft die Herstellung eines individualisierten dentalen Abdrucklöffels mit einem Träger mit einer äußeren Oberfläche und einer inneren Oberfläche, wobei die innere Oberfläche zumindest teilweise einer Negativform eines Teils eines individuellen Gebisses entspricht und zumindest ein erster Teil der inneren Oberfläche mit einer Haltestruktur überdeckt ist.

### Stand der Technik

Es ist bekannt zur Erzeugung eines Abdrucks eines Gebisses oder eines Bereichs eines Gebisses einen individualisierten Abdrucklöffel zu verwenden, welcher einen dem Kieferbogen folgenden gebogenen Träger mit dem Gebiss zugewandten individualisierten Flächen aufweist. Der Träger nimmt eine weiche, aushärtbare Abdruckmasse auf. Um sicherzustellen, dass die Abdruckmasse nach dem Aushärten in dem Träger verbleibt und mit diesem von dem Gebiss entfernt werden kann, ist eine Rückhaltekraft notwendig. Diese kann mittels eines auf die Innenfläche des Trägers aufgebrachten Haftstoffs realisiert werden, welcher die Abdruckmasse an dem Träger festhält. Eine weitere Variante ist es, Löcher in der Trägeroberfläche anzuordnen. Während der Abdrucknahme wird ein Teil der Abdruckmasse durch die Löcher hinausgepresst, wodurch die Abdruckmasse nach dem Aushärten fest mit dem Träger verbunden ist.

Aus der US 6,875,016 B2 ist ein Abdrucklöffel bekannt, an dessen innerer Oberfläche Ankerelemente angeordnet sind. Die Ankerelemente sind bogenförmig ausgebildet und über die Oberfläche verteilt angeordnet, so dass die Abdruckmasse in einem noch nicht ausgehärteten Zustand die Ankerelemente umfließt und insbesondere auch einen Raum unterhalb jedes Bogens einnimmt. Wird das Abdruckmaterial gehärtet, erhöht sich durch die bogenförmigen Elemente die Haltekraft zwischen Abdruckmasse und Abdrucklöffel. Auf ein zusätzliches Haftmittel kann so verzichtet werden.

GB2443604A offenbart ein Zahnärztlicher Abformlöffel.

DE10004415A1 offenbart ein Dentaler Abformlöffel.

WO2013/026600A1 offenbart ein individualisierten zahnärztlichen Abformlöffel und dessen Herstellung. US3473225 offenbart einen dentalen Abdrucklöffel. JP2015066258A offenbart einen Abformlöffel.

Aufgabe der vorliegenden Erfindung ist es, den Stand der Technik weiter zu bilden und einen einfach handhabbaren Abdrucklöffel bereitzustellen sowie eine hohe Haftung der Abdruckmasse am Löffel sicherzustellen.

### Darstellung der Erfindung

Diese Aufgabe wird durch das Verfahren zur Herstellung eines individualisierten dentalen Abdrucklöffels gemäß Anspruch 1 gelöst.

Die Erfindung betrifft ein Verfahren zur Herstellung eines individualisierten dentalen Abdrucklöffels. Es wird ein digitales erstes Abdrucklöffelmodell eines individualisierten Abdrucklöffels anhand eines digitalen Kiefermodells oder eines digitalen Kieferbereichsmodells erstellt. Dabei weist das erste Abdrucklöffelmodell einen Träger mit mindestens einer inneren Oberfläche auf, die zumindest teilweise einer Negativform des Kiefermodells oder Kieferbereichsmodells entspricht.

Mindestens ein Oberflächenteilbereich auf der inneren Oberfläche wird von Hand und/oder automatisch markiert und oberhalb und/oder unterhalb des mindestens einen Oberflächenteilbereichs eine Haltestruktur angeordnet. Das erste Abdrucklöffelmodell wird mit der Haltestruktur als Fertigungsvorlage abgespeichert und der Abdrucklöffel nach der Fertigungsvorlage maschinell gefertigt.

Die Haltestruktur weist eine zu dem Oberflächenteilbereich im Wesentlichen parallel verlaufende oder mit dem Oberflächenteilbereich übereinstimmende, von mindestens einer Aussparung durchsetzte erste Oberfläche auf, wobei sich jeweils eine Vertiefung an jede Aussparung anschließt , die sich von der Aussparung in Richtung des Trägers und/oder in den Träger hinein erstreckt und mindestens eine Hinterschneidung aufweist.

Ein individualisierter Abdrucklöffel zeichnet sich dadurch aus, dass die innere Oberfläche des Trägers zumindest teilweise an die Form eines individuellen Gebisses angepasst ist. Hierfür wird der Träger des Abdrucklöffels basierend auf einem digitalen Kiefermodell oder Kieferbereichsmodell so gefertigt, dass die mindestens eine innere Oberfläche des Trägers der Außenkontur des Kiefermodells bzw. Kieferbereichsmodells möglichst nahekommt. Dabei kann der Träger eine beispielsweise dem Unterkiefer oder dem Oberkiefer entsprechende innere Oberfläche oder auch zwei einander gegenüberliegende innere Oberflächen aufweisen, wobei die eine dem Unterkiefer entspricht, während die andere dem Oberkiefer entspricht. Abdrucklöffel mit zwei gegenüberliegenden inneren Oberflächen für Ober- und Unterkiefer werden häufig auch als Tripple-Tray oder Dual-Arch Abdrucklöffel bezeichnet und ermöglichen es gleichzeitig von Unterkiefer und Oberkiefer einen Abdruck zu nehmen.

Üblich bzw. erstrebenswert ist ein Abstand zwischen 0,5 mm und 3 mm zwischen der inneren Oberfläche des Trägers und der Außenkontur des Kiefermodells bzw. des Kieferbereichsmodells. Für manche Anwendungen bzw. in manchen Bereichen kann auch ein Abstand von nur 0,1 mm erstrebenswert sein.

Das Kiefermodell oder das Kieferbereichsmodell zur Herstellung des individualisierten Abdrucklöffels kann auf beliebige Weise erzeugt worden sein. Es wird beispielsweise anhand eines Abdrucks mit einem generischen Abdrucklöffel erzeugt, also mittels eines Abdrucklöffels mit einer allgemeinen, nicht individualisierten Form. Durch die große Menge an Abdruckmasse, welche für einen Abdruck mittels generischem Abdrucklöffel notwendig ist, sowie die gegebenenfalls ungleichmäßige Verteilung bzw. Stärke der Abdruckmasse zwischen dem Gebiss, dem angrenzenden Zahnfleisch und dem Träger, weist das mittels generischem Abdrucklöffel erhaltene Modell eine für einige Anwendungen ungenügende Genauigkeit auf. Insbesondere für die Herstellung von starren, größere Flächen überdeckenden Strukturen, wie beispielsweise große Brücken oder eine Modellgussprothese, weist ein solches Modell keine ausreichende Genauigkeit auf.

Der individualisierte Abdrucklöffel stellt dagegen sicher, dass die Abdruckmasse zumindest über den gesamten individualisierten Bereich mit einer möglichst gleichmäßigen und geringen Stärke verteilt ist, so dass ein möglichst hoher und gleichmäßiger Druck auf die Abdruckmasse ausgeübt werden kann. Hierdurch wird eine hohe Genauigkeit des erhaltenen Abdrucks bzw. Modells des Gebisses und des angrenzenden Zahnfleischs erreicht.

Der mindestens eine Oberflächenteilbereich wird von einem Anwender mittels eines geeigneten Eingabemittels oder automatisch anhand von vorbestimmten Kriterien auf der inneren Oberfläche des Trägers festgelegt, um dort die Haltestruktur anzuordnen, die ein Anhaften der Abdruckmasse nach dem Aushärten an dem Träger des Abdrucklöffels sicherstellen soll. Es kann auch die gesamte innere Oberfläche des Trägers als Oberflächenteilbereich markiert und mit einer Haltestruktur versehen werden.

Die Haltekraft wird durch ein Eindringen von Abdruckmasse in die Hinterschneidungen der Haltestruktur erreicht. Hinterschneidung bezeichnet hier ein Teilvolumen einer Vertiefung, welches hinterschnittig hinter bzw. unter der ersten Oberfläche liegt. Die Hinterschneidung befindet sich somit in einer im Wesentlichen senkrecht zu der ersten Oberfläche verlaufenden Projektion hinter der ersten Oberfläche bzw. wird von der ersten Oberfläche überdeckt. Die Hinterschneidung kann sich dabei an nur einer Seite der Vertiefung befinden, also nur einen Teilbereich einer sich an eine Kante der Aussparung anschließenden Seitenwand der Vertiefung einnehmen. Ebenso kann sich eine Hinterschneidung über den gesamten Bereich der sich direkt an die Kante der Aussparung anschließenden Seitenwände erstrecken, z.B. bei einer kreiskegelförmigen Vertiefung. Eine Vertiefung kann auch mehrere voneinander getrennte bzw. von keine Hinterschnitte aufweisenden Seitenwänden getrennte Hinterschneidungen aufweisen. Beispielsweise können zwei sich gegenüberliegende Seitenwände der Vertiefung hinterschnittig ausgebildet sein, während die jeweils dazwischenliegenden Seitenwände senkrecht zu der ersten Oberfläche verlaufen.

Die Stärke der durch die Haltestruktur erreichten Rückhaltekraft wird daher im Wesentlichen durch die Hinterschneidungen, also deren Form, Größe und Anzahl bzw. Dichte im markierten Bereich bestimmt. Dabei können Form, Größe und Dichte der Hinterschneidungen und entsprechend auch die Form und Größe der Vertiefungen sowie die Dichte der Aussparungen über den Oberflächenteilbereich konstant sein oder auch variieren. Es ist beispielsweise möglich, in besonders belasteten Bereichen der inneren Oberfläche, also in Oberflächenbereichen, auf die bei dem Entfernen des Abdrucks von dem Gebiss und dem Zahnfleisch besonders große Kräfte wirken, eine Haltestruktur mit größeren Hinterschneidungen oder einer höheren Dichte an Hinterschneidungen anzuordnen, um eine größere Rückhaltekraft zu erreichen als in anderen nicht so belasteten Oberflächenbereichen. Eine hohe Haltekraft ist beispielsweise für Flächen notwendig, die senkrecht zu einer Einschubrichtung des Abdrucklöffels verlaufen, während für Flächen, die parallel zu der Einschubrichtung verlaufen, auch eine geringere Haltekraft ausreicht. Mit Einschubrichtung wird hier die Richtung bezeichnet, in der der Abdruck auf den Kiefer bzw. Kieferbereich aufgesetzt bzw. wieder entfernt wird.

Die Form und Größe der Hinterschneidungen kann beispielsweise durch einen relativ zu der ersten Oberfläche anzugebenden Winkel charakterisiert werden, unter dem die Hinterschneidung unter die erste Oberfläche ragt. Die Hinterschneidungen können auch so ausgeführt sein, dass zwei oder auch mehrere Vertiefungen, die jeweils von unterschiedlichen Aussparungen ausgehen, miteinander verbunden sind.

Die Aussparungen, ihre Form und insbesondere ihre Größe stellt das Eindringen der Abdruckmasse in die Vertiefungen und damit auch in die Hinterschneidungen sicher. Eine Anpassung der Größe und/oder der Form der Aussparungen an die Zähigkeit der Abdruckmasse ist daher vorteilhaft. Ein Hineinfließen der Abdruckmasse in die Hinterschneidungen kann typischerweise durch 0,5 mm bis 2 mm große Aussparungen und/oder 0,5 bis 2 mm tiefe Vertiefungen sichergestellt werden.

Es sei angemerkt, dass die erste Oberfläche der Haltestruktur nur im Wesentlichen parallel zu dem Oberflächenteilbereich verläuft, d.h. dass eine gemittelte Ausrichtung der Oberfläche ungefähr parallel zu dem ausgewählt oder markierten Oberflächenteilbereich verläuft oder mit dieser im Wesentlichen zusammenfällt. Hierdurch wird sichergestellt, dass die Fertigungsvorlage und damit auch der hergestellte Abdrucklöffel in dem mit einer Haltestruktur versehenden Bereich nur möglichst geringfügig von der ursprünglich gefundenen individualisierten Form, also dem ursprünglichen ersten Abdrucklöffelmodell abweicht.

Es versteht sich, dass alle Parameter der Haltestruktur von Hand und/oder auch automatisch erzeugt bzw. gestaltet werden können. Ferner versteht es sich, dass auch die Höhe der Haltestruktur bzw. der ersten Oberfläche der Haltestruktur variieren kann. Unterschiedliche Teilbereiche der ersten Oberfläche können in unterschiedlichen Abständen parallel zu dem Oberflächenteilbereich verlaufen, so dass die Haltestruktur in unterschiedlichen Bereichen unterschiedlich stark ausgebildet ist. Hierdurch kann der Bereich bzw. die Größe der Hinterschneidungen und dadurch die durch die Haltestruktur erreichbare Haltekraft Bereichsweise angepasst werden.

Die Haltestruktur kann als fertiges dreidimensionales Modell ausgewählt, erstellt und/oder angeordnet werden. Das heißt, es wird oder wurde vorab zur Auswahl eine dreidimensionale virtuelle Struktur erstellt, die dann auf dem Oberflächenteilbereich des Trägers angeordnet wird oder durch entsprechendes Absenken des Oberflächenteilbereichs teilweise oder vollständig in dem Träger angeordnet wird. Die Struktur kann beispielsweise aus einer Reihe von vorab erstellten Strukturen ausgewählt werden, die jeweils eine erste Oberfläche mit einer vorbestimmten Dichte an Aussparungen, mit sich an die Aussparungen anschließenden Vertiefungen mit vorbestimmter Form und Größe und mit einer in einem Abstand zu der ersten Oberfläche verlaufende Unterseite aufweisen. Die Seitenflächen bzw. die Größe der ersten Oberfläche und der Unterseite können dann beispielsweise automatisch bei dem Anordnen an die Form und Größe des ausgewählten Oberflächenteilbereichs angepasst werden.

Alternativ kann die Haltestruktur dadurch erzeugt werden, dass im markierten Oberflächenteil die Aussparungen und die sich anschließenden Vertiefungen mit Hinterschneidungen durch Subtraktion bzw. Entfernen von Trägermaterial im Abdrucklöffelmodell erzeugt werden.

Durch die Hinterschneidungen der Haltestruktur wird eine feste Verbindung zwischen dem Träger und der ausgehärteten Abdruckmasse erreicht. So werden ein Haftmittel sowie der zusätzliche Arbeitsschritt des Aufbringens des Haftmittels eingespart und eine besonders einfache Anwendung des hergestellten Abdrucklöffels ermöglicht. Ferner ist aufgrund der geschlossenen Form der inneren Oberfläche des Trägers, die keine Durchgangslöcher aufweist, ein hoher Druck auf die Abdruckmasse realisierbar. Dies ermöglicht eine besonders saubere und detailgetreue Abbildung des Gebisses sowie des angrenzenden Zahnfleischs.

Durch das Integrieren der Haltestruktur in der Fertigungsvorlage wird der individualisierte Abdrucklöffel direkt mit Haltestruktur gefertigt, es erübrigt sich somit auch ein zusätzlicher Fertigungsschritt, mit dem eine Haltestruktur nachträglich in oder an einem hergestellten individualisierten Abdrucklöffel angebracht werden könnte. Das Anordnen der Haltestruktur an dem Abdrucklöffelmodell stellt einen einfachen, leicht kontrollierbaren Arbeitsschritt dar, der händisch oder auch vollständig automatisch durch eine Recheneinheit vorgenommen werden kann, wodurch das erfindungsgemäße Verfahren besonders schnell und kostengünstig durchführbar ist. Ferner reicht durch die flächige Anordnung von Hinterschneidungen eine geringe Höhe der Struktur, um die benötigte Rückhaltekraft zwischen dem Träger eines Abdrucklöffels und einer darin ausgehärteten Abdruckmasse zu erreichen.

Vorteilhafterweise weist die Haltestruktur mehrere Aussparungen auf, wobei eine Dichte, eine Form und eine Größe der Aussparungen sowie eine Form und eine Größe der Hinterschneidungen automatisch und/oder manuell angegeben werden.

Die Rückhaltekraft kann allgemein durch Veränderung der Hinterschneidungen selbst und durch Veränderung der Dichte der Hinterschneidungen beeinflusst werden. Insbesondere die Form und Größe der Hinterschneidungen, die Dichte, also der Anzahl der auf dem Oberflächenteilbereich angeordneten Aussparungen bzw. Hinterschneidungen bestimmen die Rückhaltekraft. Die Größe und die Form der Aussparungen muss an die Abdruckmasse, insbesondere an deren Zähigkeit angepasst sein, um ein Eindringen der Abdruckmasse in die Vertiefungen und Hinterschneidungen sicherzustellen. Durch Angabe oder Auswahl der unterschiedlichen Parameter kann ein Anwender von Hand oder eine Recheneinheit automatisch die mit der Haltestruktur erreichbare Rückhaltekraft gestalten. Beispielsweise können unterschiedliche Formen, Größen und Dichten für Hinterschneidungen und Aussparungen aus einer Liste von einem Anwender ausgewählt werden. Ebenso möglich ist es, eine Auswahl oder Angabe einer gewünschten Haltekraft vorzusehen, wobei die Parameter der Haltestruktur automatisch entsprechend der gewünschten Haltestruktur erzeugt werden. Auch eine völlig automatische Erzeugung der Parameter ist möglich.

Vorteilhafterweise wird der mindestens eine Oberflächenteilbereich nach dem Markieren gegenüber der nicht zu dem Oberflächenteilbereich gehörenden Teil der inneren Oberfläche um eine Tiefe in den Träger hinein abgesenkt, wobei die anschließend auf dem mindestens einen Oberflächenbereich angeordnete Haltestruktur gegenüber dem Oberflächenbereich eine Höhe aufweist, die genau der Tiefe des Absenkens entspricht. Hierdurch wird die Haltestruktur mit den Hinterschneidungen in dem Träger versenkt, so dass die erste Oberfläche der Haltestruktur mit der restlichen inneren Oberfläche des Trägers abschließt. Dadurch wird der Unterschied zwischen der Fertigungsvorlage und dem ursprünglichen individualisierten Abdrucklöffelbereich insbesondere in dem individualisierten Bereich der inneren Oberfläche minimiert. Entsprechend wird ein störender und/oder die Qualität mindernder Einfluss der Haltestruktur durch eine zumindest Bereichsweise Reduzierung oder Vergrößerung des Abstands zwischen dem Abdrucklöffel und dem Gebiss bzw. dem Zahnfleisch bei Anwendung des Abdrucklöffels reduziert.

Erfindungsgemäß werden mehrere Oberflächenteilbereiche von Hand und/oder automatisch markiert und jeweils identische und/oder unterschiedliche Haltestrukturen oberhalb und/oder unterhalb der unterschiedlichen Oberflächenteilbereichen angeordnet, wobei sich besonders vorteilhafterweise die unterschiedlichen Haltestrukturen hinsichtlich einer Dichte der Aussparungen und/oder der Form der Aussparungen und/oder der Größe der Aussparungen und/oder hinsichtlich der Form der Hinterschneidungen und/oder hinsichtlich der Größe der Hinterschneidungen unterscheiden. So können auf einfache Weise per Hand oder automatisch beispielsweise nicht zusammenhängende Bereiche oder Bereiche für unterschiedlichen Haltestrukturen festgelegt werden, um unterschiedliche Rückhaltekräfte für die jeweiligen Bereiche zu erreichen. Besonders vorteilhaft ist es, die Haltestruktur für mindestens einen der mehreren Oberflächenteilbereiche abhängig von einer auf den Oberflächenteilbereich bei einer Verwendung des Abdrucklöffels wirkenden maximalen Kraft und/oder abhängig von einer gewünschten Haltekraft für den Oberflächenteilbereich und/oder abhängig von einer Zähigkeit einer für eine Erstellung eines Abdrucks zu verwendenden Abdruckmasse auszuwählen. Insbesondere bei dem Entfernen des Abdrucklöffels mit der Abdruckmasse von einem zu vermessenden Kieferbereich besteht die Gefahr, dass sich die Abdruckmasse von der inneren Oberfläche des Abdrucklöffels löst und an einem Teil des Kieferbereichs haften bleibt. Die wirkende maximale Kraft unterscheidet sich in unterschiedlichen Bereichen der inneren Oberfläche deutlich. Entsprechend bedarf es in unterschiedlichen Bereichen der inneren Oberfläche des Abdrucklöffels unterschiedlich starker Rückhaltekräfte, um ein Ablösen der Abdruckmasse von dem Abdrucklöffel zu verhindern. Ferner beeinflusst auch die Zähigkeit der Abdruckmasse die auf die Abdruckmasse wirkenden Kräfte bzw. die notwendige Rückhaltekraft beim Entfernen des Abdrucklöffels mit Abdruckmasse von eine Kieferbereich.

Vorteilhafterweise besteht die Haltestruktur aus mehreren benachbart angeordneten Halteelementen, wobei eine dreidimensionale Form der Halteelemente und/oder eine Dichte der Halteelemente automatisch und/oder von Hand angegeben werden. Dies stellt eine weitere Alternative zur Gestaltung der Haltestruktur dar. Die nebeneinander angeordneten Halteelemente fügen sich zu der Haltestruktur zusammen, wobei jedes Halteelement eine Elementgrundfläche, eine Elementoberseite und Seitenwände aufweist und die Elemente mit den Elementgrundflächen auf dem markierten Oberflächenteilbereich der Trägerstruktur oder einer in den Träger hinein abgesenkten Entsprechung des Oberflächenteilbereichs angeordnet werden. Die erste Oberfläche der Haltestruktur setzt sich entsprechend aus den Elementoberflächen der Halteelemente zusammen. Die zwischen den Halteelementen entstehenden Lücken ergeben die Aussparungen der ersten Oberfläche sowie die Vertiefungen und Hinterschneidungen. Die Halteelemente können in gleichmäßigen Abständen, in variablen Abständen und/oder sich teilweise berührend angeordnet werden. Da die Rückhaltekraft entsprechend von der Dichte der Halteelemente abhängt, kann durch Vorgabe, Auswahl und/oder Variation der Dichte der Halteelemente die Rückhaltekraft kontrolliert bzw. gestaltet werden.

Es versteht sich, dass jedes Halteelement mindestens eine gegenüber der Elementoberfläche hinterschnittig verlaufende Seitenwand aufweist. Die Halteelemente können beispielsweise rotationssymmetrisch ausgebildet sein, so dass sich der hinterschnittige Bereich bzw. die Hinterschneidung über die gesamten Seitenwände jedes Halteelements erstreckt und entsprechend alle Vertiefungen und gegebenenfalls auch alle Aussparungen miteinander verbunden sind. Die Halteelemente können beispielsweise auch zwei gegenüberliegende und parallel zueinander bzw. senkrecht zu der Elementoberfläche verlaufende Seitenwände sowie zwei hinterschnittige Seitenwände aufweisen. Solche Halteelemente können auch mit den parallel bzw. senkrecht verlaufenden Seitenwänden aneinander angrenzend angeordnet werden, so dass sich hinsichtlich der Vertiefungen und Aussparungen parallel verlaufende Kanäle ergeben.

Vorteilhafterweise wird der Abdrucklöffel nach der Fertigungsvorlage mittels eines additiven Fertigungsverfahrens hergestellt. Additive Fertigungsverfahren, die auch als generative Fertigungsverfahren bezeichnet werden, z.B. 3D-Drucker, stellen eine besonders einfache Art dar, den Abdrucklöffel mit integrierter Haltestruktur einstückig und in einem Verfahrensschritt zu fertigen.

Es versteht sich, dass auch subtraktive Fertigungsverfahren genutzt werden können, um die Haltestrukturen des Abdrucklöffels bzw. insbesondere die Hinterschneidungen zu fertigen.

Der gemäß der Erfindung herzustellende Abformlöffel ist ein individualisierter dentaler Abdrucklöffel mit einem Träger mit einer inneren Oberfläche, wobei die innere Oberfläche zumindest teilweise einer Negativform eines Teils eines individuellen Gebisses und des angrenzenden Zahnfleischs entspricht und zumindest ein Oberflächenteilbereich der inneren Oberfläche mit einer Haltestruktur überdeckt ist. Die Haltestruktur weist eine zu dem Oberflächenteilbereich im Wesentlichen parallel verlaufende oder mit dem Oberflächenteilbereich übereinstimmende, von mindestens einer Aussparung durchsetzte erste Oberfläche auf, wobei sich jeweils eine Vertiefung an jede Aussparung der ersten Oberfläche anschließt, sich die Vertiefung von der Aussparung in Richtung des Trägers und/oder in den Träger hinein erstreckt und jede Vertiefung mindestens eine Hinterschneidung aufweist.

Der individualisierte dentale Abdrucklöffel weist alle Vorteile und Eigenheiten auf, die im Rahmen der Beschreibung des erfindungsgemäßen Verfahrens hinsichtlich eines individualisierten Abdrucklöffels mit den entsprechenden Eigenschaften genannt wurden.

Vorteilhafterweise ist der Oberflächenteilbereich zu 50% von der ersten Oberfläche und zu 50% von den Aussparungen überdeckt. So wird eine ausreichende Größe der Aussparungen erreicht, um sicherzustellen, dass die Abdruckmasse vollständig in die Vertiefungen und damit auch in die Hinterschneidungen eindringt.

Vorteilhafterweise erstrecken sich die Hinterschneidungen unterhalb von mindestens 30% der ersten Oberfläche. Je größer der Bereich der Hinterschneidungen bzw. je größer die Hinterschneidungen ausgebildet sind, umso größer wird die Rückhaltekraft.

Vorteilhafterweise besteht die Haltestruktur aus mehreren nebeneinander angeordneten Halteelementen. Es versteht sich, dass alle Halteelemente jeweils eine Elementoberfläche aufweisen, welche zusammen die erste Oberfläche ergeben, dass die Aussparungen der ersten Oberfläche und die sich anschließenden Vertiefungen sich aus Abständen zwischen den Halteelementen ergeben. Hierdurch wird nicht ausgeschlossen, dass einzelne bzw. mehrere Halteelemente auch teilweise aneinander angrenzend angeordnet sind. Ferner versteht sich, dass jedes Halteelement jeweils einen gegenüber der Elementoberfläche hinterschnittigen Bereich aufweist, der eine Hinterschneidung der Haltestruktur ergibt.

Vorteilhafterweise sind die Halteelemente T-förmig oder X-förmig oder V-förmig ausgebildet. Dies stellen einfache Formen für Halteelemente mit mindestens zwei hinterschnittigen Bereichen bzw. Hinterschneidungen dar. Werden die Halteelemente rotationssymmetrisch ausgeführt, so erstreckt sich für jedes Halteelement jeweils eine Hinterschneidung über die gesamten Seitenwände des Halteelements.

Vorteilhafterweise nimmt der Oberflächenteilbereich mindestens 50% der inneren Oberfläche des Trägers ein. Je größer der Anteil des Oberflächenteilbereichs und damit auch der Haltestruktur an der inneren Oberfläche des Trägers, umso größer ist die erreichbare Rückstellkraft für eine in dem Abdrucklöffel ausgehärtete Abdruckmasse.

Vorteilhafterweise beträgt ein Abstand zwischen der ersten Oberfläche der Haltestruktur und dem Oberflächenteilbereich der inneren Oberfläche des Trägers und/oder einem Boden der mindestens einen Vertiefung 0,1 mm bis 0,5 mm. Durch die flächige Anordnung der Haltestruktur bzw. der Hinterschneidungen reicht schon eine geringe Tiefe der Haltestruktur, deutlich kleiner als 1 mm, um die benötigte Haltekraft zwischen dem Träger eines Abdrucklöffels und einer darin ausgehärteten Abdruckmasse zu erreichen. Je größer der von der Haltestruktur überdeckte Teil der inneren Oberfläche des Trägers und je mehr Aussparungen bzw. Hinterschneidungen im Bereich der Haltestruktur angeordnet sind, umso geringer kann die Tiefe der Haltestruktur ausfallen.

Vorteilhafterweise ist der Oberflächenteilbereich als Boden einer Vertiefung in der inneren Oberfläche des Trägers ausgebildet, wobei eine Tiefe der Vertiefung einer Ausdehnung der Haltestruktur senkrecht zu der ersten Oberfläche der Haltestruktur entspricht. Hierdurch wird erreicht, dass die erste Oberfläche der Haltestruktur stetig in die restliche Oberfläche des Trägers übergeht.

Vorteilhafterweise sind die Haltestruktur und der Träger einstückig ausgebildet.

Kurzbeschreibung der Zeichnungen Ausführungsbeispiele der Erfindung sind in der Zeichnung dargestellt. Es zeigt die
- Fig. 1: einen dentalen Abdrucklöffel mit einer Haltestruktur,
- Fig. 2: eine erste Ausführungsform der Haltestruktur,
- Fig. 3A,B: weitere Ausführungsformen der Haltestruktur,
- Fig. 4A,B: einen auf einen Unterkiefer aufgebrachten Adrucklöffel in zwei Ausführungsformen,
- Fig. 5: eine schematische Darstellung von Verfahrens schritten.

### Ausführungsbeispiele

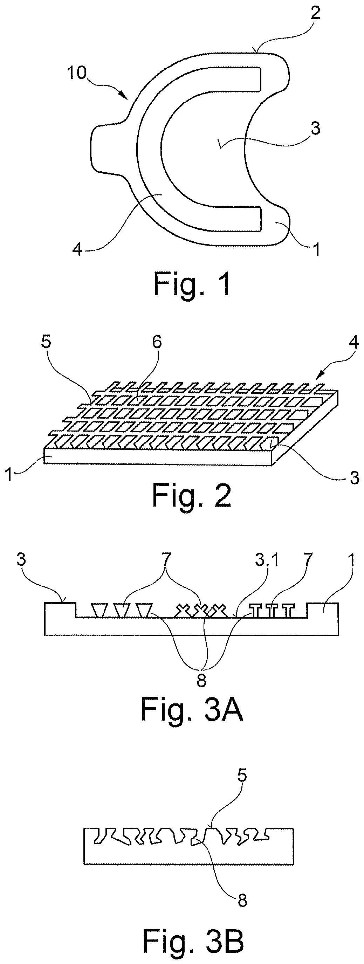

Die Fig. 1 zeigt einen individualisierten dentalen Abdrucklöffel 10 mit einem Träger 1 zur Aufnahme einer Abdruckmasse. Der Träger weist eine äußere Oberfläche 2 und eine innere Oberfläche 3 auf, wobei die innere Oberfläche 3 zumindest Bereichsweise dem Gebiss und dem angrenzenden Zahnfleisch eines Patienten (nicht dargestellt) entspricht. Ein Teil der inneren Oberfläche 3 ist von einer Haltestruktur 4 überdeckt.

Eine erste Ausführungsform der Haltestruktur 4 ist in Fig. 2 skizziert. Die auf der inneren Oberfläche des Trägers 1 angeordnete Haltestruktur 4 weist eine erste Oberfläche 5 auf. Die erste Oberfläche 5 verläuft im dargestellten Ausführungsbeispiel im Wesentlichen parallel zu der inneren Oberfläche 3 des Trägers 1. Die erste Oberfläche 5 der Haltestruktur ist von Aussparungen 6 mit sich anschließenden Vertiefungen durchsetzt. Die Aussparungen 6 sind rechteckig ausgebildet und gleichmäßig angeordnet, so dass die erste Oberfläche 5 gitterförmig ausgebildet ist. Jede Vertiefung weist mindestens eine relativ zu der inneren Oberfläche 3 schräg verlaufende Seitenfläche und eine dadurch gebildete Hinterschneidung auf.

Ebenso möglich wäre es, dass im Bereich der Haltestruktur 4 die Oberfläche 5 mit der inneren Oberfläche 3 des Trägers zusammenfällt, also identisch ist, wobei die Vertiefungen in den Träger hineinreichen.

Drei weitere Ausführungsbeispiele der Haltestruktur 4 sind in Fig. 3A skizziert. In allen drei Ausführungsbeispielen ist die Haltestruktur 4 aus einer Vielzahl von Halteelementen 7 gebildet, die auf einer gegenüber einer ursprünglichen inneren Oberfläche 3 abgesenkten Oberfläche 3.1 nebeneinander angeordnet sind. In Fig. 3A sind pro Ausführungsvariante jeweils drei nebeneinander angeordnete Halteelemente 7 im Profil dargestellt. Die Halteelemente 7 sind V-förmig, X-förmig und T-förmig ausgebildet, so dass jedes Halteelement 7 zumindest zwei Hinterschneidungen 8 aufweist. Es versteht sich, dass die Halteelemente auch vier Hinterschneidungen oder eine sich vollständig rundum erstreckende Hinterschneidung aufweisen können.

Die in Fig. 3B skizzierte Ausführungsform einer Haltestruktur 4 weist eine Vielzahl von unregelmäßig auf der ersten Oberfläche 5 angeordneten Aussparungen 6 auf, an die sich schlauchartige, gekrümmte und jeweils unterschiedlich geformte Vertiefungen mit jeweils mindestens einer Hinterschneidung 8 anschließen. Eine solche Haltestruktur 4 kann beispielsweise durch zufälliges Verteilen von Aussparungen und zufälliges Anordnen von schlauchförmigen, gekrümmten Vertiefungen in dem Träger bzw. durch zufälliges Subtrahieren von schlauchförmigen, gekrümmten Vertiefungen aus dem Trägermaterial erzeugt werden.

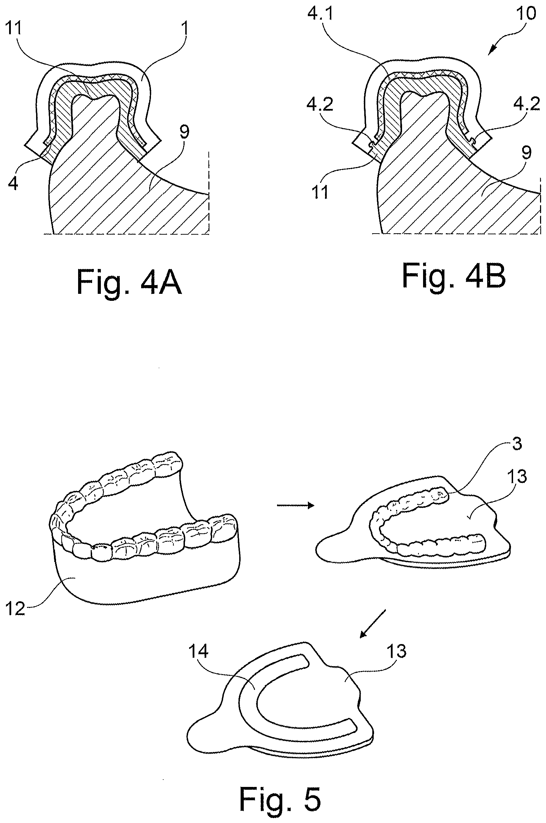

Fig. 4A zeigt einen auf einem Unterkiefer 9 angeordneten erfindungsgemäßen Abdrucklöffel 10 in einer Schnittansicht.

Der Träger 1 und die auf der inneren Oberfläche 3 des Trägers 1 angeordnete Haltestruktur 4 weisen eine vergrößerte Negativform eines Teilbereichs des Unterkiefers 9 auf. In dem dargestellten Ausführungsbeispiel ist die Haltestruktur 4 so in dem Träger 1 des Abdrucklöffels 10 versenkt, dass die erste Oberfläche 5 der Haltestruktur 4 mit dem nicht von der Haltestruktur 4 überdeckten Teil der inneren Oberfläche 3 bündig abschließt.

In Fig. 4B ist ebenfalls ein auf einem Unterkiefer 9 angeordneter erfindungsgemäßer Abdrucklöffel 10 in einer Schnittansicht dargestellt, wobei der Abdrucklöffel 10 zwei Oberflächenteilbereiche mit jeweils unterschiedlichen Haltestrukturen 4.1, 4.2 aufweist. Während sich ein erster Oberflächenteilbereich mit der ersten Haltestruktur 4.1 flächig über einen Kernbereich der inneren Oberfläche 3 erstreckt, ist der zweite Oberflächenteilbereich streifenförmig entlang eines Randbereichs der inneren Oberfläche 3 angeordnet. Die zweite Haltestruktur 4.2 im zweiten Oberflächenteilbereich 15 ist Omega-förmig, nach Art einer Uhrglasfassung ausgebildet, die eine besonders hohe Rückhaltekraft im Randbereich sicherstellt.

Zwischen der Haltestruktur 4 und gegebenenfalls einem nicht von der Haltestruktur 4 überdeckten Teil der inneren Oberfläche 3 sowie dem von dem Abdrucklöffel überdeckten Teil des Unterkiefers 9 ist eine Abdruckmasse 11 angeordnet. Die Abdruckmasse 11 ist bei einem Aufbringen des Abdrucklöffels 10 auf dem Unterkiefer 9 weich und/oder zähflüssig. Die weiche Abdruckmasse 11 passt sich einerseits der Form des Gebisses und des angrenzenden Zahnfleischs des Unterkiefers 9 genau an und dringt andererseits in die Hinterschneidungen 8 ein. Nach einem Aushärten der Abdruckmasse 11 ist die Abdruckmasse aufgrund der Hinterschneidungen 8 der Haltestruktur 4 fest mit dem Träger 1 des Abdrucklöffels 10 verbunden, so dass sie zusammen mit dem Abdrucklöffel 10 vollständig von dem Unterkiefer 9 entfernt werden kann.

Es versteht sich, dass entsprechend auch ein Abdruck des Oberkiefers oder mit einem auf zwei Seiten eine entsprechende innere Oberfläche 3 mit Haltestruktur 4 aufweisenden Abdrucklöffel gleichzeitig ein Abdruck von Ober- und Unterkiefer erzeugt werden kann.

In Fig. 5 sind einige Verfahrensschritte einer ersten Ausführungsform des erfindungsgemäßen Verfahrens skizziert. In einem ersten Verfahrensschritt wird anhand eines digitalen Kiefermodells 12 ein digitales erstes Abdrucklöffelmodell 13 des Abdrucklöffels 10 mit dem Träger 1 mit der inneren Oberfläche 3 erzeugt, wobei die innere Oberfläche 3 zumindest teilweise einer Negativform des Kiefermodells 12 entspricht.

In einem zweiten Verfahrensschritt wird auf der inneren Oberfläche 3 mindestens ein Oberflächenteilbereich 14 markiert, auf dem in einem dritten Verfahrensschritt ein Haltestruktur 4 angeordnet und als Fertigungsvorlage abgespeichert wird.

Das Anordnen der Haltestruktur kann beispielsweise das digitale Aufsetzten einer flächigen Haltestruktur 4 auf den Oberflächenteilbereich, das Absenken des Oberflächenteilbereichs 14 mit anschließendem Aufsetzten einer flächigen Haltestruktur 4 auf die abgesenkte Fläche, das Erzeugen einer Haltestruktur 4 durch Erzeugen von Vertiefungen und Hinterschneidungen in dem Oberflächenteilbereich 14 oder entsprechende Schritte umfassen.

Anschließend wird in einem vierten Verfahrensschritt der Abdrucklöffel nach der Fertigungsvorlage gefertigt.

### Bezugszeichenliste

- 1: Träger
- 2: äußere Oberfläche
- 3: innere Oberfläche
- 4: Haltestruktur
- 5: erste Oberfläche der Haltestruktur
- 6: Aussparung
- 7: Halteelemente
- 8: Hinterschneidungen
- 9: Unterkiefer
- 10: individualisierter Abdrucklöffel
- 11: Abdruckmasse
- 12: Kiefermodell oder Kieferbereichsmodell
- 13: erstes Abdrucklöffelmodell
- 14: Oberflächenteilbereich

## Patentansprüche

1. Verfahren zur Herstellung eines individualisierten dentalen Abdrucklöffels (10), wobei ein digitales erstes Abdrucklöffelmodell (13) des individualisierten Abdrucklöffels (10) anhand eines digitalen Kiefermodells (12) oder eines digitalen Kieferbereichsmodells erstellt wird, wobei das erste Abdrucklöffelmodell (13) einen Träger (1) mit mindestens einer inneren Oberfläche (13) aufweist, **dadurch gekennzeichnet, dass** mindestens ein Oberflächenteilbereich (14) auf der inneren Oberfläche(3)von Hand markiert oder automatisch detektiert wird, oberhalb und/oder unterhalb des mindestens einen Oberflächenteilbereichs (14) eine Haltestruktur (4) angeordnet wird, wobei der Träger (1)und die auf der inneren Oberfläche (3) des Trägers (1) angeordnete Haltestruktur (4) eine vergrößerte Negativform eines Teils eines individuellen Gebisses und des angrenzenden Zahnfleischs des Kiefermodells (12) oder Kieferbereichsmodells aufweisen, das erste Abdrucklöffelmodell (13) mit der Haltestruktur (4) als Fertigungsvorlage abgespeichert und der Abdrucklöffel (10) nach der Fertigungsvorlage maschinell gefertigt wird, wobei die Haltestruktur (4) eine zu dem Oberflächenteilbereich (14) im Wesentlichen parallel verlaufende oder mit dem Oberflächenteilbereich (14) übereinstimmende, von mindestens einer Aussparung (6) durchsetzte erste Oberfläche (5) aufweist, und sich die jeweiligen Vertiefungen der jeweiligen Aussparungen (6) in Richtung des Trägers (1) und/oder in den Träger (1) hinein erstrecken, und dabei mindestens eine Vertiefung mindestens eine Hinterschneidung (8) aus Richtung der Vertiefungsrichtung oder der Einschubrichtung des individualisierten Abdrucklöffels aufweist.

2. Verfahren nach Anspruch 1, **dadurch gekennzeichnet, dass** die Haltestruktur (4) mehrere Aussparungen (6) aufweist, wobei eine Dichte, eine Form und eine Größe der Aussparungen (6) sowie eine Form und eine Größe der Hinterschneidungen (8) automatisch und/oder manuell angegeben werden.

3. Verfahren nach Anspruch 1 oder 2, **dadurch gekennzeichnet, dass** der mindestens eine Oberflächenteilbereich (14) nach dem Markieren gegenüber dem nicht zu dem Oberflächenteilbereich (14) gehörenden Teil der inneren Oberfläche (3) um eine Tiefe in den Träger (1) hinein abgesenkt wird und die anschließend auf dem mindestens einen Oberflächenteilbereich (14) angeordnete Haltestruktur (4) gegenüber dem Oberflächenteilbereich (14) eine Höhe aufweist, wobei die Höhe der Haltestruktur (4) genau der Tiefe des Absenkens entspricht.

4. Verfahren nach einem der Ansprüche 1 bis 3, **dadurch gekennzeichnet, dass** mehrere Oberflächenteilbereiche (14) von Hand und/oder automatisch markiert werden und jeweils identische und/oder unterschiedliche Haltestrukturen (4) oberhalb und/oder unterhalb der unterschiedlichen Oberflächenteilbereiche (14) angeordnet werden.

5. Verfahren nach Anspruch 4, **dadurch gekennzeichnet, dass** sich die unterschiedlichen Haltestrukturen (4) hinsichtlich einer Dichte der Aussparungen (6) und/oder der Form der Aussparungen (6) und/oder der Größe der Aussparungen (6) und/oder hinsichtlich der Form der Hinterschneidungen (8) und/oder hinsichtlich der Größe der Hinterschneidungen (8) unterscheiden.

6. Verfahren nach Anspruch 4 oder 5, **dadurch gekennzeichnet, dass** die Haltestruktur für mindestens einen der mehreren Oberflächenteilbereiche (14) abhängig von einer auf den Oberflächenteilbereich (14) bei einer Verwendung des Abdrucklöffels wirkenden maximalen Kraft und/oder abhängig von einer gewünschten Haltekraft für den Oberflächenteilbereich (14) und/oder abhängig von einer Zähigkeit einer für eine Erstellung eines Abdrucks zu verwendenden Abdruckmasse ausgewählt wird.

7. Verfahren nach einem der Ansprüche 1 bis 6, **dadurch gekennzeichnet, dass** die Haltestruktur (4) aus mehreren benachbart angeordneten Halteelementen (7) besteht, wobei eine dreidimensionale Form der Halteelemente (7) und/oder eine Dichte der Halteelemente (7) automatisch und/oder von Hand angegeben werden.

8. Verfahren nach einem der Ansprüche 1 bis 7, **dadurch gekennzeichnet, dass** der Abdrucklöffel (10) nach der Fertigungsvorlage mittels eines additiven Fertigungsverfahrens hergestellt wird.

9. Verfahren nach einem der vorangegangenen Ansprüche, **dadurch gekennzeichnet, dass** der Oberflächenteilbereich (14) zu 50% von der ersten Oberfläche (5) und zu 50% von den Aussparungen (6) überdeckt ist.

10. Verfahren nach dem Anspruch 9, **dadurch gekennzeichnet, dass** die Hinterschneidungen (8) sich unterhalb von mindestens 30% der ersten Oberfläche (5) erstrecken.

11. Verfahren nach einem der vorangegangenen Ansprüche, **dadurch gekennzeichnet, dass** die Haltestruktur (4) aus mehreren nebeneinander angeordneten Halteelementen (7) besteht.

12. Verfahren nach Anspruch 11, **dadurch gekennzeichnet, dass** die Halteelemente (7) T-förmig oder X-förmig oder V-förmig ausgebildet sind.

13. Verfahren nach einem der vorangegangenen Ansprüche, **dadurch gekennzeichnet, dass** der Oberflächenteilbereich (14) mindestens 50% der inneren Oberfläche (3) des Trägers (1) einnimmt.

14. Verfahren nach einem der vorangegangenen Ansprüche, **dadurch gekennzeichnet, dass** ein Abstand zwischen der ersten Oberfläche (5) der Haltestruktur (4) und dem Oberflächenteilbereich (14) der inneren Oberfläche (3) des Träger (1) und/oder einem Boden der mindestens einen Vertiefung 0,1 mm bis 0,5 mm beträgt.

15. Verfahren nach einem der vorangegangenen Ansprüche, **dadurch gekennzeichnet, dass** der Oberflächenteilbereich (14) als Boden einer Vertiefung in der inneren Oberfläche (3) des Trägers (1) ausgebildet ist, wobei eine Tiefe der Vertiefung einer Ausdehnung der Haltestruktur (4) senkrecht zu der ersten Oberfläche (5) der Haltestruktur (4) entspricht.

16. Verfahren nach einem der vorangegangenen Ansprüche, **dadurch gekennzeichnet, dass** die Haltestruktur (4) und der Träger (1) einstückig ausgebildet sind.

## Claims

1. A method of manufacture of individualised dental impression tray (10), wherein a digital first impression tray model (13) of the individualised impression tray (10) is created using a digital jaw model (12) or a digital jaw area model, the first impression tray model (13) having a carrier (1) with at least one inner surface (13), **characterised in that** at least one surface sub-area (14) is marked by hand or automatically detected on the inner surface (3), a holding structure (4) is arranged above and/or below the at least one surface sub-area (14), wherein the carrier (1) and the holding structure (4) arranged on the inner surface (3) of the carrier (1) have an enlarged negative form of part of an individual set of teeth and the neighbouring gums of the jaw model (12) or jaw area model, the first impression tray model (13) with the holding structure (4) is stored as the production template and the impression tray (10) is machine-made according to the production template, wherein the holding structure (4) has a first surface (5) which runs essentially parallel to the surface sub-area (14) or which corresponds to the surface sub-area (14), with at least one recess (6) passing through it, and the respective depressions of the respective recesses (6) extend in the direction of the carrier (1) and/or into the carrier (1), and at least one depression has at least one undercut (8) from the direction of the depression or the insertion direction of the individualised impression tray.

2. The method according to claim 1, **characterised in that** the holding structure (4) has several recesses (6), wherein a density, a shape and a size of the recesses (6) and a shape and a size of the undercuts (8) are indicated automatically and/or manually.

3. The method according to claim 1 or 2, **characterised in that** the at least one surface sub-area (14) is lowered according to the marking relative to the part of the inner surface (3) which does not belong to the surface sub-area (14) by a depth into the carrier (1) and the holding structure (4) subsequently arranged on the at least one surface sub-area (14) has a height relative to the surface sub-area (14), wherein the height of the holding structure (4) corresponds exactly to the depth of the lowering.

4. The method according to any of claims 1 to 3, **characterised in that** several surface sub-areas (14) are marked by hand and/or automatically and identical and/or different holding structures (4) are arranged above and/or below each of the different surface sub-areas (14).

5. The method according to claim 4, **characterised in that** the different holding structures (4) differ with regard to a density of the recesses (6) and/or the shape of the recesses (6) and/or the size of the recesses (6) and/or with regard to the shape of the undercuts (8) and/or with regard to the size of the undercuts (8).

6. The method according to claim 4 or 5, **characterised in that** the holding structure is selected for at least one of the plurality of surface sub-areas (14) depending on a maximum force acting on the surface sub-area (14) when the impression tray is used and/or depending on a desired holding force for the surface sub-area (14) and/or depending on a toughness of an impression compound to be used for making an impression.

7. The method according to any of claims 1 to 6, **characterised in that** the holding structure (4) consists of a plurality of adjacently arranged holding elements (7), wherein a three-dimensional shape of the holding elements (7) and/or a density of the holding elements (7) is specified automatically and/or by hand.

8. The method according to any of claims 1 to 7, **characterised in that** the impression tray (10) is produced according to the production template by means of an additive production process.

9. The method according to any of the preceding claims, **characterised in that** 50% of the surface sub-area (14) is covered by the first surface (5) and 50% by the recesses (6).

10. The method according to claim 9, **characterised in that** the undercuts (8) extend below at least 30% of the first surface (5).

11. The method according to any of the preceding claims, **characterised in that** the holding structure (4) consists of a plurality of holding elements (7) arranged next to one another.

12. The method according to claim 11, **characterised in that** the holding elements (7) are T-shaped or X-shaped or V-shaped.

13. The method according to any of the preceding claims, **characterised in that** the surface sub-area (14) occupies at least 50% of the inner surface (3) of the carrier (1).

14. The method according to any of the preceding claims, **characterised in that** a distance between the first surface (5) of the holding structure (4) and the surface sub-area (14) of the inner surface (3) of the carrier (1) and/or a bottom of the at least one depression is 0.1 mm to 0.5 mm.

15. The method according to any of the preceding claims, **characterised in that** the surface sub-area (14) is designed as the bottom of a depression in the inner surface (3) of the carrier (1), wherein a depth of the depression corresponds to an extension of the holding structure (4) perpendicular to the first surface (5) of the holding structure (4).

16. The method according to any of the preceding claims, **characterised in that** the holding structure (4) and the carrier (1) are formed in one piece.

## Revendications

1. Procédé de fabrication d'un porte-empreinte (10) dentaire individualisé, dans lequel un premier modèle de porte-empreinte (13) numérique du porte-empreinte (10) individualisé est réalisé à l'aide d'un modèle de mâchoire (12) numérique ou d'un modèle de zone de mâchoire numérique, dans lequel le premier modèle de porte-empreinte (13) comporte un support (1) doté d'au moins une surface intérieure (13), **caractérisé en ce qu'**au moins une zone partielle de surface (14) est marquée à la main ou détectée automatiquement sur la surface intérieure (3), au-dessus et/ou au-dessous de l'au moins une zone partielle de surface (14), une structure de maintien (4) est disposée, dans lequel le support (1) et la structure de maintien (4) disposés sur la surface intérieure (3) du support (1) comportent une forme négative agrandie d'une partie d'une denture individuelle et de la gencive adjacente du modèle de mâchoire (12) ou du modèle de zone de mâchoire, le premier modèle de porte-empreinte (13) est enregistré avec la structure de maintien (4) en tant que gabarit de fabrication et le porte-empreinte (10) est fabriqué mécaniquement selon le gabarit de fabrication, dans lequel la structure de maintien (4) comporte une première surface (5) s'étendant essentiellement parallèlement à la zone partielle de surface (14) ou correspond à la zone partielle de surface (14), pénétrée par au moins un évidement (6), et des cavités respectives des évidements (6) respectifs s'étendent dans la direction du support (1) et/ou dans le support (1), et au moins une cavité comporte ainsi au moins une contre-dépouille (8) depuis la direction de cavité ou la direction d'insertion du porte-empreinte individualisé.

2. Procédé selon la revendication 1, **caractérisé en ce que** la structure de maintien (4) comporte plusieurs évidements (6), dans lequel une densité, une forme et une taille des évidements (6), ainsi qu'une forme et une taille des contre-dépouilles (8) sont spécifiées automatiquement et/ou manuellement.

3. Procédé selon la revendication 1 ou 2, **caractérisé en ce que** l'au moins une zone partielle de surface (14), après le marquage, est abaissée, par rapport à la partie de la surface intérieure (3) n'appartenant pas à la zone partielle de surface (14), d'une profondeur dans le support (1) et la structure de maintien (4) disposée ultérieurement sur l'au moins une zone partielle de surface (14) présente une hauteur par rapport à la zone partielle de surface (14), dans lequel la hauteur de la structure de maintien (4) correspond exactement à la profondeur de l'abaissement.

4. Procédé selon l'une quelconque des revendications 1 à 3, **caractérisé en ce que** plusieurs zones partielles de surface (14) sont marquées à la main et/ou automatiquement et des structures de maintien (4) identiques et/ou différentes sont respectivement disposées au-dessus et/ou au-dessous des zones partielles de surface (14) différentes.

5. Procédé selon la revendication 4, **caractérisé en ce que** les différentes structures de maintien (4) diffèrent en ce qui concerne une densité des évidements (6) et/ou la forme des évidements (6) et/ou la taille des évidements (6) et/ou en ce qui concerne la forme des contre-dépouilles (8) et/ou en ce qui concerne la taille des contre-dépouilles (8).

6. Procédé selon la revendication 4 ou 5, **caractérisé en ce que** la structure de maintien, pour l'au moins une zone partielle de surface de la pluralité de zones partielles de surface (14), est choisie en fonction d'une force maximale agissant sur la zone partielle de surface (14) lors de l'utilisation du porte-empreinte et/ou en fonction d'une force de maintien souhaitée pour la zone partielle de surface (14) et/ou en fonction d'une ténacité d'une matière d'empreinte à utiliser pour la réalisation d'une empreinte.

7. Procédé selon l'une quelconque des revendications 1 à 6, **caractérisé en ce que** la structure de maintien (4) est constituée de plusieurs éléments de maintien (7) disposés de manière adjacente, dans lequel une forme tridimensionnelle des éléments de maintien (7) et/ou une densité des éléments de maintien (7) sont spécifiées automatiquement et/ou manuellement.

8. Procédé selon l'une quelconque des revendications 1 à 7, **caractérisé en ce que** le porte-empreinte (10) est fabriqué selon le gabarit de fabrication au moyen d'un procédé de fabrication additive.

9. Procédé selon l'une quelconque des revendications précédentes, **caractérisé en ce que** la zone partielle de surface (14) est couverte à 50 % par la première surface (5) et à 50 % par les évidements (6).

10. Procédé selon la revendication 9, **caractérisé en ce que** les contre-dépouilles (8) s'étendent au-dessous d'au moins 30 % de la première surface (5).

11. Procédé selon l'une quelconque des revendications précédentes, **caractérisé en ce que** la structure de maintien (4) est constituée de plusieurs éléments de maintien (7) disposés les uns à côté des autres.

12. Procédé selon la revendication 11, **caractérisé en ce que** les éléments de maintien (7) sont en forme de T, de X ou de V.

13. Procédé selon l'une quelconque des revendications précédentes, **caractérisé en ce que** la zone partielle de surface (14) occupe au moins 50 % de la surface intérieure (3) du support (1).

14. Procédé selon l'une quelconque des revendications précédentes, **caractérisé en ce qu'**une distance entre la première surface (5) de la structure de maintien (4) et la zone partielle de surface (14) de la surface intérieure (3) du support (1) et/ou un fond de l'au moins un évidement est de 0,1 mm à 0,5 mm.

15. Procédé selon l'une quelconque des revendications précédentes, **caractérisé en ce que** la zone partielle de surface (14) est conçue sous la forme de fond d'un évidement dans la surface intérieure (3) du support (1), dans lequel une profondeur de l'évidement correspond à une extension de la structure de maintien (4) perpendiculairement à la première surface (5) de la structure de maintien (4).

16. Procédé selon l'une quelconque des revendications précédentes, **caractérisé en ce que** la structure de maintien (4) et le support (1) sont formés monobloc.
